# EUROPÄISCHE PATENTSCHRIFT

(11) **EP 3 652 802 B1**
(45) Veröffentlichungstag und Bekanntmachung des Hinweises auf die Patenterteilung: **19.05.2021**
(21) Anmeldenummer: 18755709.5
(22) Anmeldetag: 13.07.2018
(51) Int. Cl.: H01M 8/248, H01M 8/04119, H01M 8/04082

(54) **BRENNSTOFFZELLENVORRICHTUNG**
FUEL CELL DEVICE
DISPOSITIF FORMANT PILE À COMBUSTIBLE

(30) Priorität: 14.07.2017 DE 102017212085; 14.07.2017 DE 102017212091
(43) Veröffentlichungstag der Anmeldung: 20.05.2020
(73) Patentinhaber: ElringKlinger AG, 72581 Dettingen (DE)
(72) Erfinder: HEMMER, Stefan, 72555 Metzingen (DE); KRAFT, Jürgen, 72555 Metzingen (DE); MORCOS, Manuel, 72076 Tübingen (DE); GÖTZ, Michael, 72581 Dettingen/Erms (DE); KAISER, Wadim, 72764 Reutlingen (DE)
(74) Vertreter: Hoeger, Stellrecht & Partner Patentanwälte mbB
(86) Internationale Anmeldenummer: PCT/EP2018/069146
(87) Internationale Veröffentlichungsnummer: WO 2019/012134

(56) Entgegenhaltungen:
- WO-A1-95/28010
- DE-B4- 10 153 372

## Beschreibung

Die vorliegende Erfindung betrifft das Gebiet der Brennstoffzellenvorrichtungen, insbesondere der Komponenten, welche für den Zusammenbau und die Versorgung eines Brennstoffzellenstacks einer Brennstoffzellenvorrichtung erforderlich sind.

Beispielsweise eine Endplatte für einen Brennstoffzellenstapel ist aus der DE 10 2004 049 623 B4 bekannt.

Brennstoffzellenvorrichtungen sind ferner beispielsweise aus der WO 95/28010 A1 und der DE 101 53 372 B4 bekannt.

Der vorliegenden Erfindung liegt die Aufgabe zugrunde, eine Brennstoffzellenvorrichtung bereitzustellen, welche einfach und kostengünstig herstellbar ist.

Diese Aufgabe wird erfindungsgemäß durch die Merkmale von Anspruch 1 gelöst.

Eine Brennstoffzellenvorrichtung umfasst vorzugsweise einen Brennstoffzellenstack, welcher insbesondere ein Stapel aus Brennstoffzellenelementen ist. Die Brennstoffzellenelemente sind insbesondere plattenförmige Einheiten, welche verschiedene Komponenten zur elektrochemischen Umsetzung von Brennstoff, zur Stromführung und zur Fluidführung aufweisen.

Eine Brennstoffzellenvorrichtung umfasst ferner vorzugsweise eine oder mehrere Versorgungseinheiten, welche insbesondere Brennstoff und/oder Oxidator, beispielsweise Wasserstoff und Luft, bereitstellen. Ferner können eine oder mehrere Versorgungseinheiten zur Kühlung oder sonstigen Temperierung des Brennstoffzellenstacks vorgesehen sein.

Dem Brennstoffzellenstack sind zudem eine Brennstoffzuführung, eine Brennstoffabführung, eine Oxidatorzuführung, eine Oxidatorabführung und/oder eine Abgasführung sowie eine Kühlmittelführung zugeordnet, um den Brennstoffzellenstack mit Brennstoff, Oxidator und/oder Kühlmittel versorgen zu können und Brennstoff, Oxidator, Abgas und/oder Kühlmittel aus dem Brennstoffzellenstack abführen zu können.

Günstig kann es sein, wenn eine Brennstoffzellenvorrichtung ein Medienmodul aufweist. Ein solches Medienmodul dient insbesondere der gleichzeitigen Führung mehrerer Fluide, wodurch insbesondere ein kompakter Aufbau realisiert werden kann.

Mittels einer Verspannungsvorrichtung ist der Brennstoffzellenstack vorzugsweise längs einer Stapelrichtung verspannt, so dass insbesondere die Brennstoffzellenelemente gegeneinander gepresst sind und sich hierdurch eine zuverlässige Abdichtung erzielen lässt.

Eine Brennstoffzellenvorrichtung umfasst ferner vorzugsweise eine Einhausung, insbesondere einen zylindrischen Mantel, welcher den Brennstoffzellenstack umgibt. Mittels der Einhausung sind insbesondere die stromführenden und/oder unter elektrischer Spannung stehenden Bauteile der Brennstoffzellenvorrichtung gegen einen unerwünschten Kontakt geschützt.

Aus der Einhausung ragen vorzugsweise lediglich Anschlusselemente, insbesondere Leitpins, heraus, um die mittels der Brennstoffzellenvorrichtung erzeugte Spannung und folglich die erzeugte elektrische Energie abgreifen zu können.

Günstig kann es sein, wenn eine Brennstoffzellenvorrichtung Folgendes umfasst:
mehrere Brennstoffzellenelemente, welche längs einer Stapelrichtung aufeinander gestapelt sind und einen Brennstoffzellenstack bilden;
eine Fluidführungseinheit zur Zuführung von Brennstoff und/oder Oxidator und/oder Kühlmittel zu den Brennstoffzellenelementen und/oder zur Abführung von Brennstoff und/oder Oxidator und/oder Abgas und/oder Kühlmittel von den Brennstoffzellenelementen, wobei die Verspannvorrichtung zwei oder mehr Querträger umfasst, welche sich zumindest näherungsweise senkrecht zur Stapelrichtung erstrecken, wobei an jedem Ende des Brennstoffzellenstacks jeweils mindestens ein Querträger angeordnet ist, wobei die Querträger mittels Spannelementen aufeinanderzu ziehbar sind und der Brennstoffzellenstack hierdurch zwischen die Querträger einspannbar ist.

Günstig kann es sein, wenn die Verspannvorrichtung mindestens zwei Querträger für jedes der beiden Enden des Brennstoffzellenstacks aufweist. Hierdurch kann insbesondere eine gleichmäßige Krafteinleitung in den Brennstoffzellenstack erzielt werden.

Die Querträger sind vorzugsweise mittels Spannstangen, insbesondere Gewindestangen, aufeinanderzu ziehbar.

Die Spannelemente sind somit vorzugsweise Spannstangen, welche insbesondere unter Verwendung von Schraubmuttern zum Einspannen der Querträger samt des dazwischen angeordneten Brennstoffzellenstacks nutzbar sind.

Vorteilhaft kann es sein, wenn die Spannelemente vollständig außerhalb des Brennstoffzellenstacks verlaufen.

Insbesondere sind die Spannelemente vorzugsweise beabstandet von dem Brennstoffzellenstack und/oder elektrisch und/oder thermisch von demselben isoliert angeordnet.

Die Verspannvorrichtung umfasst vorzugsweise ein, zwei oder mehr Paare von Querträgern, wobei jeweils ein Querträger eines Paars von Querträgern an jeweils einem Ende des Brennstoffzellenstacks angeordnet ist. Die Verspannvorrichtung umfasst ferner vorzugsweise für jedes Paar von Querträgern jeweils zwei Spannelemente, welche an einander gegenüberliegenden Enden der Querträger angreifen.

Günstig kann es sein, wenn der Brennstoffzellenstack an einem oder an beiden seiner Enden mit jeweils einer Endplatte versehen ist, wobei die Verspannvorrichtung vorzugsweise mittelbar oder unmittelbar an der einen oder den beiden Endplatten angreift.

Die Endplatte ist vorzugsweise aus einem elektrisch isolierenden Material gebildet oder hiermit versehen.

Die Materialwahl erfolgt vorzugsweise derart, dass keine den Betrieb und/oder die Haltbarkeit der Brennstoffzellenvorrichtung und/oder die Sicherheit von bedienenden Personen gefährdende Spannungsübertragung und/oder Stromübertragung von dem Brennstoffzellenstack auf die Verspannvorrichtung erfolgt.

Es kann vorgesehen sein, dass eine oder beide Endplatten aus einem Kunststoffmaterial, insbesondere einem Spritzgusskunststoffmaterial, gebildet sind.

Ferner kann vorgesehen sein, dass die Endplatten aus einem gefrästen, stranggepressten oder gegossenen Metallwerkstoff gebildet sind. Insbesondere in diesem Fall sind vorzugsweise zusätzliche Komponenten, insbesondere elektrisch isolierende Komponenten, beispielsweise eine elektrisch isolierende Beschichtung oder Zwischenlage, an der einen oder den mehreren Endplatten angeordnet. Die eine oder die mehreren Endplatten sind dann insbesondere Hybridendplatten, wobei beispielsweise ein metallischer Kern mit einer Kunststoffummantelung vorgesehen sein kann.

Bei einer Ausgestaltung der Erfindung ist vorgesehen, dass eine oder beide der Endplatten eine Strömungsführung zur Führung von Oxidator, Brennstoff, Abgas und/oder Kühlmittel umfassen.

Die Strömungsführung umfasst vorzugsweise eine oder mehrere Fluidleitungen zur Führung von Oxidator, Brennstoff, Abgas und/oder Kühlmittel. Insbesondere sind die Fluidleitungen zur Führung des Oxidators, Brennstoffs, Abgases und/oder Kühlmittels vollständig fluidwirksam getrennt von der Verspannvorrichtung angeordnet und/oder ausgebildet.

Insbesondere kommt die Verspannvorrichtung vorzugsweise nicht in Kontakt mit den mittels der Fluidleitungen geführten Fluide.

Günstig kann es sein, wenn eine oder beide der Endplatten jeweils eine Kraftübertragungsstruktur aufweisen, welche eine von der einen oder den mehreren Querträgern applizierte Kraft mit einer vorgegebenen Kraftverteilung auf den Brennstoffzellenstack überträgt.

Die Kraftübertragungsstruktur ist vorzugsweise eine dreidimensionale Struktur, insbesondere Fachwerkstruktur und/oder Wabenstruktur.

Insbesondere weist die Kraftübertragungsstruktur vorzugsweise eine lokal variierende Dicke auf.

Ferner kann vorgesehen sein, dass die Kraftübertragungsstruktur durch eine lokal variierende Dicke der Endplatte gebildet ist.

Die Dicke ist dabei insbesondere die Ausdehnung parallel zur Stapelrichtung.

Günstig kann es sein, wenn die Kraftübertragungsstruktur im Bereich einer Plattenaufnahme zur Aufnahme einer Druckverteilerplatte angeordnet und/oder ausgebildet ist.

Insbesondere umfasst die Kraftübertragungsstruktur eine Wabenstruktur und/oder Rippenstruktur und/oder Stützstruktur. Hierdurch kann insbesondere eine stabile und dennoch materialsparende Ausgestaltung der Kraftübertragungsstruktur erzielt werden.

Mittels der Kraftübertragungsstruktur ist insbesondere eine homogene Verspannung des Brennstoffzellenstacks realisierbar, insbesondere zum Ausgleich von thermischen Ausdehnungsänderungen und/oder zum Ausgleich von Schock- und/oder Vibrationsbelastungen.

Insbesondere dann, wenn die Kraftübertragungsstruktur aus einem Kunststoffmaterial gebildet ist, insbesondere einstückig mit der Endplatte ausgebildet und/oder durch dieselbe gebildet ist, ergibt sich vorzugsweise eine hohe Bauteilgenauigkeit, wodurch letztlich eine besonders homogene Flächenpressung mit geringen Toleranzen erzielt werden kann.

Günstig kann es sein, wenn eine dem Brennstoffzellenstack zugewandte Seite der Endplatte eine im Wesentlichen plane Fläche aufweist, welche beispielsweise eine Abnehmeraufnahme zur Aufnahme einer Abnehmereinheit bildet. Hierdurch kann ebenfalls eine gleichmäßige Krafteinleitung in den Brennstoffzellenstack sowie vorzugsweise auch eine gleichmäßige Flächenpressung zur Abdichtung erzielt werden.

Eine Materialstärke eines Abnehmerblechs der Abnehmereinheit beträgt vorzugsweise mindestens ungefähr 40 µm, beispielsweise mindestens ungefähr 50 µm, und/oder höchstens ungefähr 400 µm, beispielsweise höchstens ungefähr 300 µm, jeweils vorzugsweise zuzüglich einer Beschichtungsdicke.

Es kann vorgesehen sein, dass die eine oder die beiden Endplatten jeweils eine Abnehmeraufnahme zur Aufnahme jeweils einer Abnehmereinheit aufweisen, mittels welcher im Brennstoffzellenstack erzeugte elektrische Energie abführbar ist.

Die Abnehmereinheit umfasst insbesondere eine Abnehmerblech, welches im Wesentlichen eben ausgebildet ist und flächig an einem Ende des Brennstoffzellenstacks anliegt, sowie eine oder mehrere, insbesondere zwei, Abnehmerleisten, an welche sich jeweils ein Leitpin oder sonstiger Anschluss anschließt. Die Abnehmerleisten sind insbesondere an diagonal einander gegenüberliegenden Bereichen des Abnehmerblechs, welches vorzugsweise im Wesentlichen rechteckig ausgebildet ist, angeordnet. Hierdurch kann vorzugsweise eine optimierte Stromabführung und/oder eine optimierte Spannungsverteilung im Brennstoffzellenstack erzielt werden.

Vorzugsweise sind zwei solcher Abnehmereinheiten vorgesehen, wobei jeweils eine Abnehmereinheit an jeweils einem Ende des Brennstoffzellenstacks angeordnet ist.

Die Leitpins der Abnehmereinheiten bilden vorzugsweise Anschlussstellen für Steck- oder Schraubverbindungen oder sonstige Möglichkeiten zur Anbindung von elektrischen Leitungen.

Günstig kann es sein, wenn die eine oder die beiden Endplatten die jeweils daran angeordnete Abnehmereinheit einerseits und die Verspannvorrichtung andererseits elektrisch voneinander isolieren.

Die Verspannvorrichtung weist vorzugsweise eine oder zwei Druckverteilerplatten auf, welche insbesondere unmittelbar an Endplatten des Brennstoffzellenstacks anliegen und an welchen die Querträger vorzugsweise mittelbar oder unmittelbar angreifen.

Die eine oder die zwei Druckverteilerplatten sind vorzugsweise aus einem metallischen Material, insbesondere Stahl, gebildet.

Beispielsweise sind die Druckverteilerplatten in einem Fräsverfahren und/oder Gießverfahren hergestellt.

Günstig kann es sein, wenn die eine oder die mehreren Druckverteilerplatten in im Wesentlichen komplementär hierzu ausgebildeten Plattenaufnahmen der Endplatten angeordnet sind. Durch solche Plattenaufnahmen kann insbesondere eine gewünschte Positionierung und/oder Zentrierung der Druckverteilerplatten relativ zu einer Kraftübertragungsstruktur gewährleistet werden.

Die Querträger der Verspannvorrichtung greifen vorzugsweise mittels jeweils eines oder mehrerer Federelemente, insbesondere Tellerfedern, an der einen oder den zwei Druckverteilerplatten an.

Insbesondere sind die Federelemente zwischen Querträger und Druckverteilerplatte eingeklemmt.

Ergänzend kann vorzugsweise ein Zentrierring und/oder eine Führungsscheibe vorgesehen sein, insbesondere um das eine oder die mehreren Federelemente relativ zu dem jeweiligen Querträger und/oder der jeweiligen Druckverteilerplatte zu positionieren und/oder zu zentrieren.

Vorzugsweise sind an jedem Ende des Brennstoffzellenstacks jeweils eine Druckverteilerplatte sowie zwei daran anliegende Federelemente, insbesondere Tellerfedern, und ein oder mehrere Querträger sowie vorzugsweise auch ein oder mehrere Zentrierringe und/oder Führungsscheiben, vorgesehen.

Die eine oder die beiden Endplatten sind vorzugsweise so ausgebildet, dass sie einerseits der Kraftübertragung und andererseits der Strömungsführung dienen.

Insbesondere kann vorgesehen sein, dass mittels der einen oder der beiden Endplatten Brennstoff, Oxidator, Abgas und/oder Kühlmittel längs der Stapelrichtung an mindestens einem Querträger und/oder an einer Druckverteilerplatte der Verspannvorrichtung vorbeiführbar ist.

Die eine oder die beiden Endplatten umfassen hierzu vorzugsweise Fluidleitungen, welche sich insbesondere längs der Stapelrichtung erstrecken und in dem Brennstoffzellenstack ausgebildete Fluidleitungen mit der Fluidführungseinheit, insbesondere dem Medienmodul, verbinden.

Erfindungsgemäß ist vorgesehen, dass die Brennstoffzellenvorrichtung Folgendes umfasst:
mehrere Brennstoffzellenelemente, welche längs einer Stapelrichtung aufeinander gestapelt sind und einen Brennstoffzellenstack bilden;
eine Fixiervorrichtung zur Fixierung der Brennstoffzellenelemente;
eine Fluidführungseinheit zur Zuführung von Brennstoff und/oder Oxidator und/oder Kühlmittel zu den Brennstoffzellenelementen und/oder zur Abführung von Brennstoff und/oder Oxidator und/oder Abgas und/oder Kühlmittel von den Brennstoffzellenelementen,
wobei die Fluidführungseinheit einen Grundkörper umfasst, welcher mehrere Fluidleitungen und Anschlussstellen zum Anschließen von Zuführleitungen und/oder Abführleitungen und/oder Zusatzkomponenten der Brennstoffzellenvorrichtung umfasst.

Die Fluidleitungen im Grundkörper können dabei insbesondere auch Verzweigungen oder Zusammenführungen umfassen.

Günstig kann es sein, wenn der Grundkörper einstückig ausgebildet ist.

Insbesondere ist der Grundkörper in einem einzigen Verfahrensschritt hergestellt oder zumindest dessen Formgebung in einem einzigen Verfahrensschritt im Wesentlichen abgeschlossen.

Der Grundkörper kann beispielsweise als ein Kunststoffspritzgussbauteil ausgebildet sein.

Vorzugsweise ist die Fluidführungseinheit so ausgebildet, dass lediglich ein Kunststoffmaterial zur Herstellung der Fluidführungseinheit Kontakt mit den geführten Medien hat, wobei hiervon vorzugsweise eventuelle Sensorelemente, etc. ausgenommen sind.

Mehrere Fluidleitungen der Fluidführungseinheit sind durch in dem Grundkörper ausgebildete Vertiefungen und ein oder mehrere diese Vertiefungen abdeckende Deckelelemente gebildet.

Die Deckelelemente verschließen insbesondere einen oder mehrere Räume, welche zwei, drei, vier oder fünfseitig von dem Grundkörper umgeben sind.

Insbesondere sind mittels eines Deckelelements mehrere Räume verschlossen.

Günstig kann es sein, wenn ein einziges Deckelelement an einer dem Brennstoffzellenstack zugewandten Seite des Grundkörpers angeordnet ist.

Das Deckelelement erstreckt sich dabei vorzugsweise über eine gesamte Ausdehnung des Grundkörpers und/oder des Brennstoffzellenstacks in einer senkrecht zur Stapelrichtung verlaufenden Ebene.

Es kann vorgesehen sein, dass der Grundkörper an zwei einander gegenüberliegenden Seiten mit jeweils einem oder mehreren Deckelelementen versehen ist. Insbesondere dann, wenn auch das eine oder die mehreren Deckelelemente Vertiefungen und/oder sonstige ausgeformte Bereiche zur Fluidführung umfassen, können hierdurch vorzugsweise sich kreuzende Fluidleitungen innerhalb der Fluidführungseinheit, insbesondere eines Medienmoduls der Fluidführungseinheit, realisiert werden.

Ferner kann die Fluidführungseinheit vorzugsweise teilweise durch eine oder mehrere Endplatten gebildet sein, wobei die Endplatten insbesondere ebenfalls eine oder mehrere Fluidleitungen umfassen oder Bestandteil hiervon sind.

Das eine oder die mehreren Deckelelemente sind vorzugsweise an einer der Fixiervorrichtung zugewandten Seite der Fluidleitungen der Fluidführungseinheit angeordnet.

Die Fixiervorrichtung ist insbesondere eine Verspannvorrichtung zum Verspannen der Brennstoffzellenelemente des Brennstoffzellenstacks.

Erfindungsgemäß ist ferner vorgesehen, dass der Grundkörper und das eine oder die mehreren Deckelelemente durch Kunststoffschweißen miteinander verbunden sind.

Insbesondere ist dabei eine fluiddichte und/oder druckdichte Verbindung vorgesehen.

Zur Verbindung kann insbesondere Heißgasschweißen, Infrarotschweißen, Laserschweißen, Reibschweißen und/oder laserbasiertes Infrarotschweißen vorgesehen sein.

Der Grundkörper ist vorzugsweise einseitig oder beidseitig mittels jeweils eines oder mehrerer Deckelelemente abgedeckt.

Die Fluidführungseinheit umfasst vorzugsweise mehrere Fluidleitungen, welche sich jeweils durch den Grundkörper, ein oder mehrere Deckelelemente und eine Endplatte des Brennstoffzellenstacks hindurcherstrecken.

Insbesondere das eine oder die mehreren Deckelelemente und die Endplatte des Brennstoffzellenstacks sind hierzu vorzugsweise mit einer oder mehreren Durchtrittsöffnungen versehen.

Vorteilhaft kann es sein, wenn die Fluidführungseinheit, insbesondere der Grundkörper, eine oder mehrere Abscheidevorrichtungen zum Abscheiden von Flüssigkeiten und/oder Feststoffen aus einem Gasstrom umfasst.

Insbesondere kann hierbei vorgesehen sein, dass die Fluidführungseinheit einen Tropfenabscheider und/oder Prallelemente und/oder Umlenkelemente, umfasst.

Beispielsweise kann eine Abscheidevorrichtung zum Abscheiden von Wasser aus einem Oxidatorstrom und/oder Brennstoffstrom vorgesehen sein.

Insbesondere sind an einem Anodeneinlass und/oder einem Anodenauslass jeweils ein oder mehrere Tropfenabscheider vorgesehen.

Eine oder mehrere Abscheidevorrichtungen sind vorzugsweise in den Grundkörper eingeformt und/oder durch Formgebung des Grundkörpers gebildet.

Günstig kann es sein, wenn der Grundkörper eine oder mehrere Ventilaufnahmen zur Aufnahme eines oder mehrerer Ventilelemente umfasst.

Ein Ventilelemente ist insbesondere ein Drosselventil, ein Spülventil, ein Überdruckventil, ein Drainageventil, etc.

Mittels eines oder mehrerer Ventilelemente kann insbesondere eine gezielte Abführung von abgeschiedenen Flüssigkeiten und/oder eine Druckregulierung in der Brennstoffzellenvorrichtung, insbesondere im Brennstoffzellenstack, erzielt werden.

Beispielsweise kann ein als Drosseldüse ausgebildetes Ventilelement genutzt werden, um aufgrund einer bestehenden Druckdifferenz einen Wassertransport von einem Tropfenabscheider am Anodeneinlass zu einem Tropfenabscheider am Anodenauslass zu erzielen.

Der Grundkörper umfasst vorzugsweise eine oder mehrere Sensorelementaufnahmen zur Aufnahme eines oder mehrerer Sensorelemente.

Ein oder mehrere Sensorelemente sind insbesondere seitlich angrenzend an einer oder mehreren Fluidleitungen angeordnet und/oder aus einer seitlichen Richtung in eine oder mehrere Fluidleitungen hineinragend.

Mittels eines oder mehrerer Sensorelemente kann insbesondere ein Druck und/oder eine Temperatur ermittelt werden. Das eine oder die mehreren Sensorelemente dienen insbesondere der Steuerung der Brennstoffzellenvorrichtung.

Günstig kann es sein, wenn der Grundkörper ein oder mehrere Stützelemente, insbesondere Stützdome und/oder Stützrippen, zur Stabilisierung und/oder Versteifung des Grundkörpers und/oder der Fluidführungseinheit umfasst.

Günstig kann es sein, wenn der Grundkörper Stützdome und/oder Stützrippen aufweist, welche insbesondere an ein Deckelelement angeschweißt werden.

Ein oder mehrere Stützelemente dienen vorzugsweise zugleich einer Tropfenabscheidung, insbesondere aufgrund von Strömungsumlenkungen und/oder Variationen der Strömungsgeschwindigkeit und/oder Strömungsquerschnitte.

Durch die gezielte Fluidführung innerhalb des Grundkörpers können vorzugsweise im Betrieb der Brennstoffzellenvorrichtung entstehende Temperaturgradienten gezielt lokal beeinflusst werden, insbesondere um einzelne Komponenten der Brennstoffzellenvorrichtung bevorzugt zu erhitzen und/oder zu kühlen.

Alternativ oder ergänzend hierzu kann eine bereichsweise und/oder Komponentenweise elektrische Heizung vorgesehen sein.

Es kann vorgesehen sein, dass die Fluidführungseinheit mit einem oder mehreren Zusatzelementen und/oder einer oder mehreren Beschichtungen versehen ist, wodurch insbesondere Bereiche mit erhöhter Wärmeleitfähigkeit und/oder Wärmespeicherkapazität gebildet werden. Auch dies ermöglicht vorzugsweise eine optimierte Temperierung.

Beispielsweise kann vorgesehen sein, dass durch eine Oberflächenstrukturierung und/oder Oberflächenmodifikation eine effiziente Abscheidewirkung erzielt wird. Insbesondere können hydrophile Oberflächen zur Tropfenabscheidung vorgesehen sein.

Beispielsweise durch eine Tropfenabscheidung an einem Anodeneinlass und/oder Kathodeneinlass kann vor einer Düsenanordnung zur Zirkulation des Gasstroms eine Entfeuchtung erfolgen, wodurch letztlich eine Eisbildung bei sehr kalten Temperaturen reduziert oder ganz vermieden werden kann.

Aufgrund der Integration der Fluidleitungen in die Fluidführungseinheit können vorzugsweise Druckverluste reduziert werden. Günstig kann es sein, wenn die Fluidführungseinheit, insbesondere der Grundkörper und/oder ein oder mehrere Deckelelemente und/oder eine oder mehrere Endplatten der Brennstoffzellenvorrichtung eine zumindest teilweise nachbehandelte, insbesondere beschichtete, Oberfläche aufweisen. Hierdurch können thermische und/oder sonstige Eigenschaften der Wandungen der Fluidleitungen gezielt beeinflusst werden, insbesondere zur gezielten Wärmezuführung und/oder Wärmeabführung und/oder zur Optimierung von Abscheideeffekten.

Die Fluidführungseinheit umfasst vorzugsweise einen thermisch isolierenden Abschnitt, mittels welchem die Fixiervorrichtung und/oder die Fluidleitungen und/oder eine oder mehrere Abscheidevorrichtungen und/oder eine oder mehrere Ventilvorrichtungen einerseits von dem Brennstoffzellenstack andererseits thermisch getrennt sind.

Der thermisch isolierende Abschnitt ist insbesondere durch eine Endplatte, beispielsweise eine Kraftübertragungsstruktur der Endplatte, gebildet.

Die Fluidführungseinheit ist vorzugsweise dadurch mit dem Brennstoffzellenstack verbunden, dass eine Endplatte, welche vorzugsweise Bestandteil der Fluidführungseinheit ist, mittels Querträgern einer Verspannvorrichtung zwischen einer Druckverteilerplatte und dem Brennstoffzellenstack eingespannt ist.

Ein Medienmodul, insbesondere ein Grundkörper und ein oder mehrere Deckelelemente der Fluidführungseinheit, ist vorzugsweise mittels Kunststoffschweißen mit der Endplatte verbunden, wodurch sich die mechanische Festlegung der Fluidführungseinheit an dem Brennstoffzellenstack ergibt.

Eine Einhausung, insbesondere ein hohlzylindrischer Mantel mit im Wesentlichen rechteckiger Grundfläche, erstreckt sich vorzugsweise von einer Endplatte zur weiteren Endplatte, wobei Übergangsbereiche zwischen der Einhausung und der jeweiligen Endplatte vorzugsweise mittels Dichtungen abgedichtet sind.

Ferner kann vorgesehen sein, dass mittels einer oder mehrerer Zentrierelemente, insbesondere Zentrierkappen, die Einhausung relativ zu dem Brennstoffzellenstack positionierbar ist.

Die Einhausung ist beispielsweise aus einem Flachmaterial gebildet, insbesondere aus einem vorgeformten Flachmaterial.

Die Einhausung kann beispielsweise ein Kunststoffmaterial und/oder ein metallisches Material umfassen oder hieraus gebildet sein.

Vorzugsweise ist die Einhausung elektrisch isolierend ausgebildet oder zumindest mit einer elektrisch isolierenden Beschichtung und/oder Hülle versehen.

Die Fluidführungseinheit umfasst vorzugsweise mehrere Anschlussstellen, welche insbesondere mittels einsteckbarer Flansche einfach an unterschiedlich dimensionierte Anschlussleitungen, Zuführleitungen, Abführleitungen, etc., anpassbar sind.

Hierdurch können insbesondere unter Verwendung ein und derselben Fluidführungseinheit unterschiedliche Leistungsklassen der Brennstoffzellenvorrichtung realisiert werden.

Die mit der Abnehmereinheit versehene Endplatte ist vorzugsweise analog zu den Brennstoffzellenelementen, insbesondere Bipolarplatten der Brennstoffzellenelemente, ausgeführt. Hierdurch kann vorzugsweise die auch zwischen den Brennstoffzellenelemenenten und/oder in den Brennstoffzellenelementen verwendete Ausgestaltung einer Dichtungs-GDL-Einheit (Gas Diffusion Layer) verwendet werden. Dies ermöglicht insbesondere eine gleichmäßige Dichtfunktion um die Fluidleitungen sowie eine zuverlässige elektrische Kontaktierung.

Die erfindungsgemäße Brennstoffzellenvorrichtung ist vorzugsweise in beliebigen Einbaulagen nutzbar.

Die Fluidleitungen, welche auch Manifolds genannt werden, sind vorzugsweise so ausgebildet, dass sich flüssiges Wasser insbesondere in Bereichen sammelt, welche bei vertikaler Ausrichtung der Brennstoffzellenelemente unterhalb der Einlässe und/oder Auslässe des Brennstoffzellenstacks liegen. Vorzugsweise wird vermieden, dass Wasser in den Brennstoffzellenstack fließt.

Alternativ oder ergänzend kann vorgesehen sein, dass ein oder mehrere Bypassleitungen und/oder Wasserabführleitungen vorgesehen sind, um flüssiges Wasser gezielt aus dem Brennstoffzellenstack und/oder aus den den Brennstoffzellenstack umgebenden Bereichen abzuführen.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Brennstoffzellenvorrichtung mit Blick auf eine Oberseite der Brennstoffzellenvorrichtung ;

- Fig. 2: eine schematische perspektivische Darstellung der Brennstoffzellenvorrichtung aus Fig. 1, mit Blick auf eine Unterseite der Brennstoffzellenvorrichtung;
- Fig. 3: eine schematische perspektivische Explosionsdarstellung der Brennstoffzellenvorrichtung aus Fig. 1;
- Fig. 4: eine schematische perspektivische Explosionsdarstellung von unterhalb eines Brennstoffzellenstacks der Brennstoffzellenvorrichtung angeordneten Komponenten der Brennstoffzellenvorrichtung aus Fig. 1;
- Fig. 5: eine schematische Draufsicht auf eine Oberseite der Brennstoffzellenvorrichtung aus Fig. 1;
- Fig. 6: einen schematischen vertikalen Schnitt durch die Brennstoffzellenvorrichtung aus Fig. 1 längs der Linie 6-6 in Fig. 5;
- Fig. 7: einen schematischen vertikalen Schnitt durch die Brennstoffzellenvorrichtung aus Fig. 1 längs der Linie 7-7 in Fig. 5;
- Fig. 8: einen schematischen vertikalen Schnitt durch die Brennstoffzellenvorrichtung aus Fig. 1 längs der Linie 8-8 in Fig. 5;
- Fig. 9: eine schematische perspektivische Darstellung eines Grundkörpers einer Fluidführungseinheit der Brennstoffzellenvorrichtung aus Fig. 1, mit Blick auf eine Unterseite des Grundkörpers;
- Fig. 10: eine schematische perspektivische Darstellung des Grundkörpers aus Fig. 9, mit Blick auf dessen Oberseite;

- Fig. 11: eine schematische Draufsicht auf eine Unterseite des Grundkörpers aus Fig. 9;
- Fig. 12: eine schematische Draufsicht auf eine Oberseite des Grundkörpers aus Fig. 9;
- Fig. 13: eine schematische Seitenansicht des Grundkörpers aus Fig. 9; und
- Fig. 14: eine weitere schematische Seitenansicht des Grundkörpers aus Fig. 9.

Gleiche oder funktional äquivalente Elemente sind in sämtlichen Figuren mit denselben Bezugszeichen versehen.

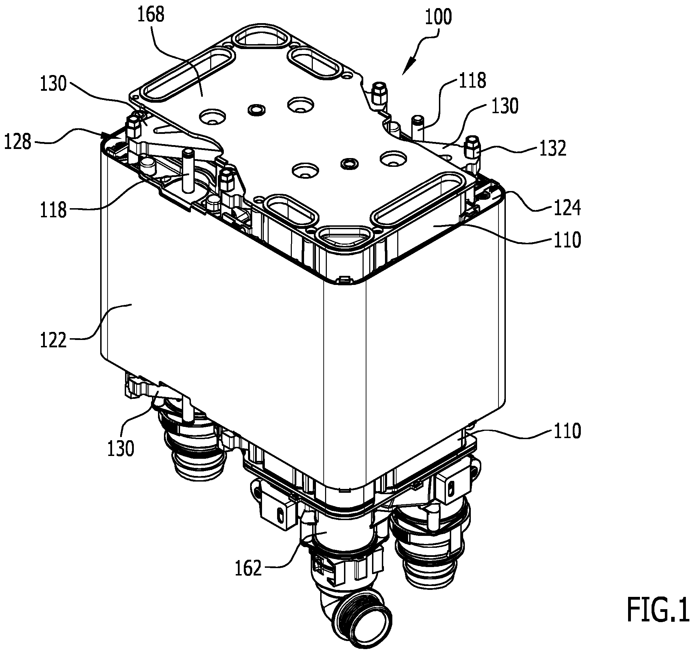

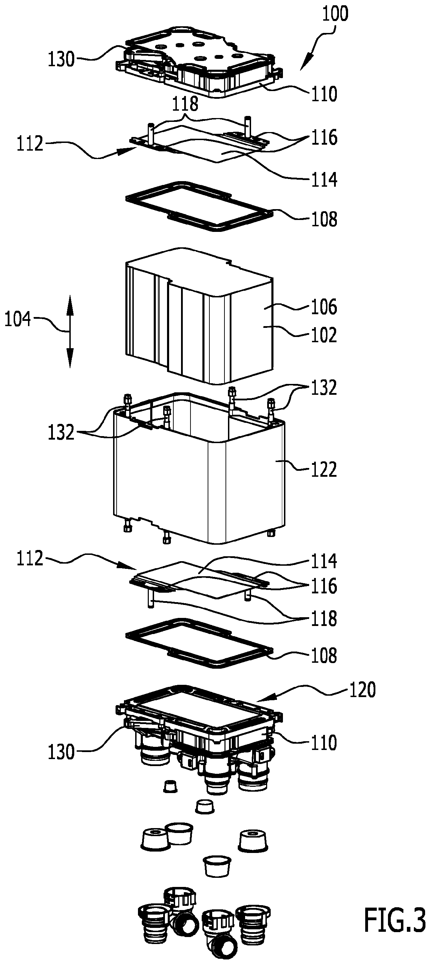

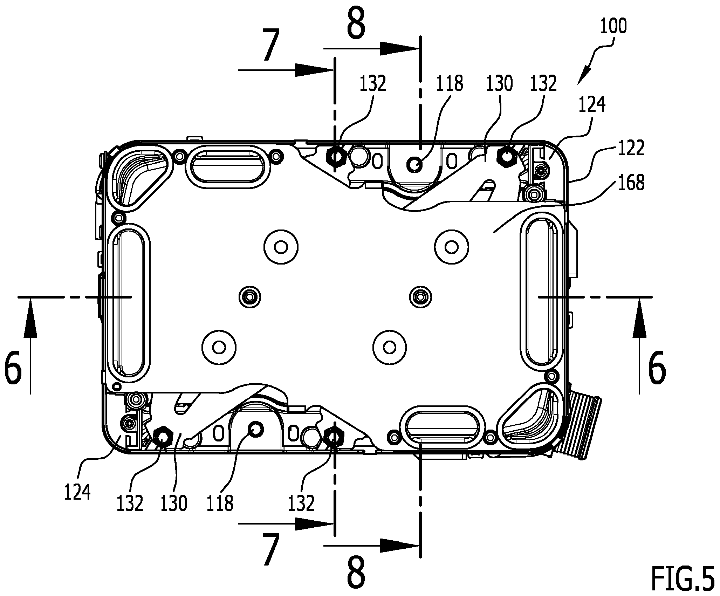

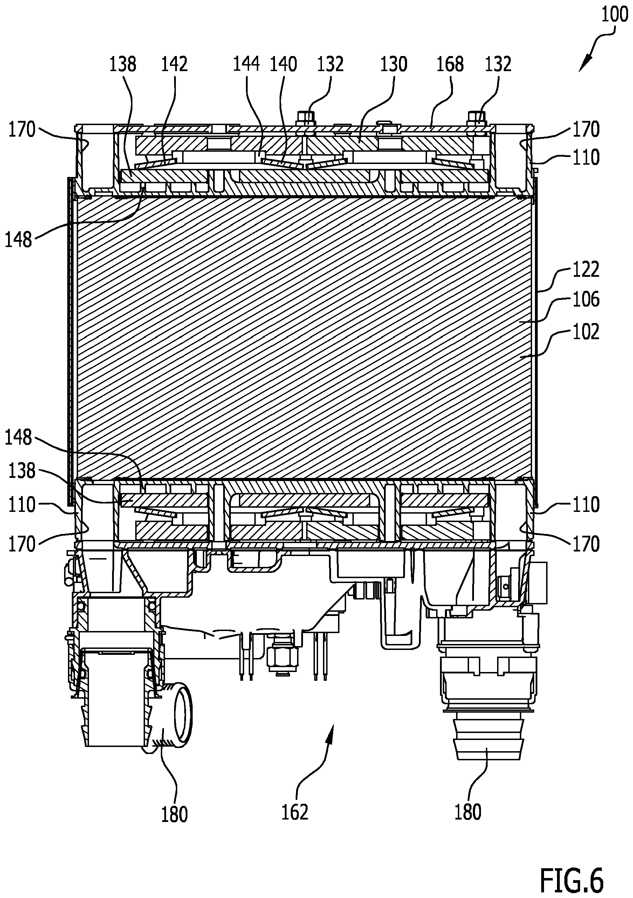

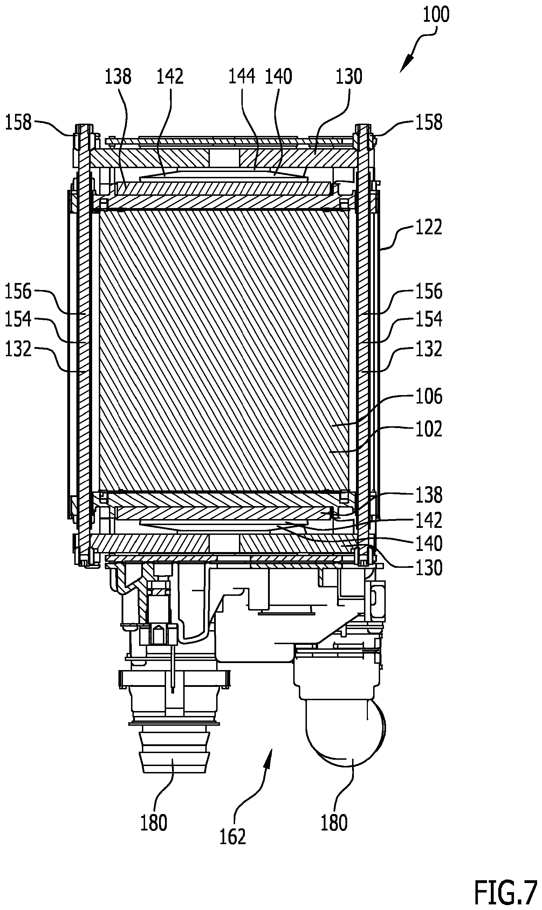

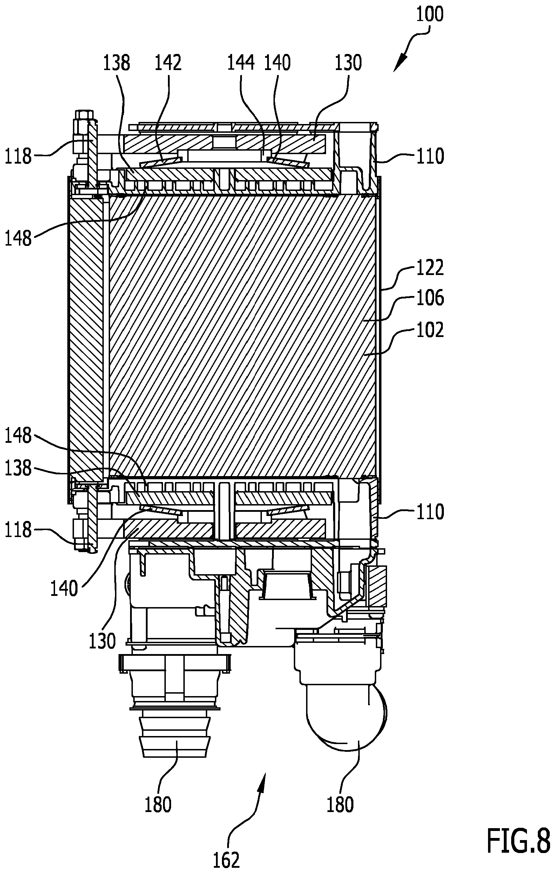

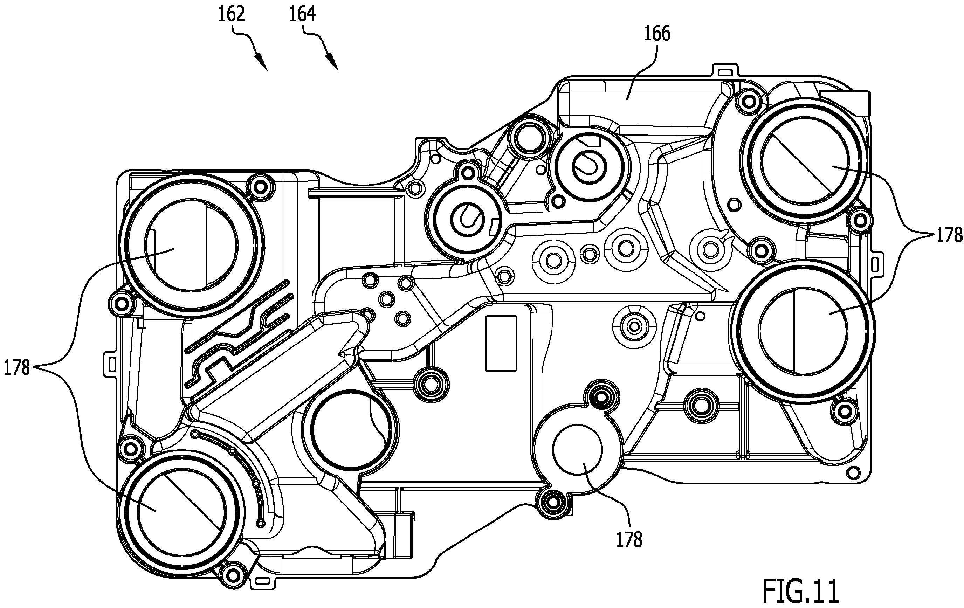

Eine in den Fig. 1 bis 14 dargestellte Ausführungsform einer als Ganzes mit 100 bezeichneten Brennstoffzellenvorrichtung dient insbesondere der Erzeugung von elektrischer Energie durch elektrochemische Umsetzung von Brennstoff mit Oxidator, beispielsweise Wasserstoff mit Luftsauerstoff.

Die Brennstoffzellenvorrichtung 100 umfasst mehrere, beispielsweise 50, 100 oder 200, Brennstoffzellenelemente 102, welche in einer Stapelrichtung 104 übereinander gestapelt sind und zusammen einen Brennstoffzellenstack 106 bilden.

Die Brennstoffzellenelemente 102 sind dabei mittels mehrerer Dichtlagen 108 zu einer Umgebung hin abgedichtet.

Längs der Stapelrichtung 104 grenzt der Brennstoffzellenstack 106 beidseitig an Endplatten 110 der Brennstoffzellenvorrichtung 100 an, wobei die Endplatten 110 beidseitig mit jeweils einer Abnehmereinheit 112 zum Abführen von elektrischer Energie von dem Brennstoffzellenstack 106 versehen sind. Die Abnehmereinheiten 112 umfassen dabei jeweils ein Abnehmerblech 114, welches über eine Dichtlage 108 abdichtend und zugleich elektrisch kontaktierend an dem Brennstoffzellenstack 106 anliegt.

Über eine oder mehrere Abnehmerleisten 116 wird elektrische Spannung von Abnehmerblech 114 abgegriffen und an einen oder mehrere Leitpins 118 übertragen.

Anstelle von Leitpins 118 können jedoch auch andere Anschlüsse, Steckverbindungen, etc. vorgesehen sein.

Günstig kann es sein, wenn jede Abnehmereinheit 112 zwei schräg, insbesondere im Wesentlichen diagonal, einander gegenüberliegende Abnehmerleisten 116 aufweist. Hierdurch kann eine optimierte Spannungsverteilung im Brennstoffzellenstack 106 sowie eine optimierte thermische Belastung der Abnehmereinheit 112 erzielt werden.

Jede Endplatte 110 umfasst vorzugsweise eine Abnehmeraufnahme 120 zur Aufnahme jeweils einer Abnehmereinheit 112.

Jede Abnehmeraufnahme 120 umfasst dabei insbesondere eine oder mehrere Durchführungsöffnungen zur Durchführung des Leitpins 118.

Wie insbesondere den Fig. 1 bis 3 zu entnehmen ist, umfasst die Brennstoffzellenvorrichtung 100 ferner eine Einhausung 122, mittels welcher der Brennstoffzellenstack 106 umgeben und vor äußerer Einwirkung geschützt ist.

Die Einhausung 122 ist insbesondere durch einen hohlzlyindrischen Körper mit im Wesentlichen rechteckiger Grundfläche gebildet und erstreckt sich von einer Endplatte 110 zur weiteren Endplatte 110.

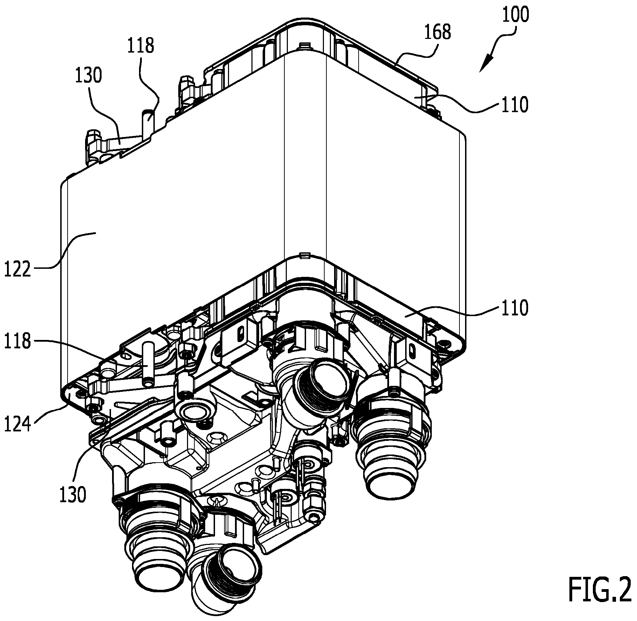

Mittels einer oder mehrerer Zentrierungskappen 124 ist die Einhausung 122 vorzugsweise relativ zu den Endplatten 110 und/oder relativ zum Brennstoffzellenstack 106 positioniert und/oder zentriert (siehe insbesondere die Fig. 1 und 2).

Wie insbesondere den Fig. 1, 3 und 4 zu entnehmen ist, umfasst die Brennstoffzellenvorrichtung 100 vorzugsweise eine Fixiervorrichtung 126 zur Fixierung der Brennstoffzellenelemente 102 relativ zueinander.

Insbesondere umfasst die Fixiervorrichtung 126 eine Verspannvorrichtung 128, mittels welcher die Brennstoffzellenelemente 102 in der Stapelrichtung 104 aufeinander gepresst sind.

Die Verspannvorrichtung 128 umfasst hierzu insbesondere mehrere Querträger 130, welche sich quer, beispielsweise im Wesentlichen senkrecht, zur Stapelrichtung 104 erstrecken, den Brennstoffzellenstack 106 somit übergreifen und/oder hintergreifen und mittels Spannelementen 132 in der Stapelrichtung 104 aufeinanderzu ziehbar sind. Der Brennstoffzellenstack 106 ist somit insbesondere zwischen die Querträger 130 spannbar.

Ein Querträger 130 kann beispielsweise im Wesentlichen rautenförmig ausgebildet sein, wobei zwei einander gegenüberliegende Enden insbesondere Aufnahmen für die Spannelemente 132 bilden.

Insbesondere ist im Wesentlichen mittig in jedem Querträger 130 eine Zentrieröffnung 134 angeordnet und/oder ausgebildet, welche insbesondere mit einem Zentriervorsprung 136 einer Endplatte 110 in Eingriff bringbar ist.

Die Querträger 130 können hierdurch einfach und exakt relativ zur Endplatte 110 ausgerichtet werden.

Günstig kann es sein, wenn die Verspannvorrichtung 128 zwei Paare von Querträgern 130 aufweist, wobei jedem Paar von Querträgern 130 jeweils zwei Spannelemente 132 zugeordnet sind und wobei von jedem Paar von Querträgern 130 jeweils ein Querträger 130 an jeweils einem Ende des Brennstoffzellenstacks 106 angeordnet ist.

Die Querträger 130 wirken insbesondere über eine Druckverteilerplatte 138 auf die Endplatte 110 und über die Endplatte 110 auf die Abnehmereinheit 112 und schließlich den Brennstoffzellenstack 106.

Zur Vergleichmäßigung einer Krafteinleitung sind vorzugsweise ein oder mehrere Federelemente 140, beispielsweise Tellerfedern 142, vorgesehen, welche insbesondere zwischen dem jeweiligen Querträger 130 und der Druckverteilerplatte 138 angeordnet sind.

Eine oder mehrere Führungsscheiben 144 dienen vorzugsweise ferner zur Positionierung und/oder Zentrierung der Tellerfedern 142, insbesondere relativ zur Zentrieröffnung 134 und/oder zum Zentriervorsprung 136.

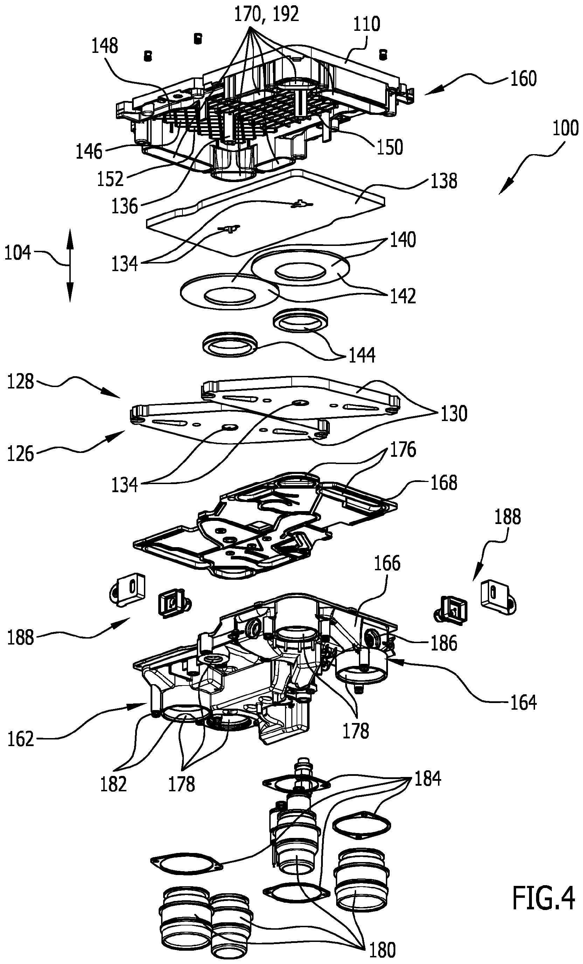

Wie insbesondere Fig. 4 zu entnehmen ist, ist vorzugsweise für zwei Querträger 130 eine einzige Druckverteilerplatte 138 vorgesehen, wobei jedem Querträger 130 eine separate Tellerfeder 142 und eine separate Führungsscheibe 144 zugeordnet ist. Zwei Zentriervorsprünge 136, welche beispielsweise an der Endplatte 110 ausgebildet sind, positionieren vorzugsweise sowohl die Druckverteilerplatte 138, welche hierzu zwei Zentrieröffnungen 134 aufweist, als auch die Federelemente 140, die Führungsscheiben 144 und die Querträger 130.

Die Endplatte 110 umfasst ferner vorzugsweise eine Plattenaufnahme 146 zur Aufnahme und/oder Positionierung der Druckverteilerplatte 138.

Die Plattenaufnahme 146 umfasst vorzugsweise eine Kraftübertragungsstruktur 148, welche insbesondere eine Wabenstruktur 150 oder eine Stützstruktur 152 umfasst oder bildet.

Mittels der Kraftübertragungsstruktur 148 kann insbesondere eine gleichmäßige Krafteinleitung von der Druckverteilerplatte 138 auf die Abnehmereinheit 112 und schließlich den Brennstoffzellenstack 106 erzielt werden, insbesondere da die Kraftübertragungsstruktur 148 vorzugsweise mit geringeren Toleranzen und somit geringeren Fertigungsungenauigkeiten herstellbar ist.

Die gesamte Endplatte 110 einschließlich der Kraftübertragungsstruktur 148 ist hierzu insbesondere als ein Kunststoff-Spritzgussbauteil ausgebildet.

Die Druckverteilerplatte 138, die Federelemente 140, die Führungsscheiben 144 und die Querträger 130 sind vorzugsweise aus einem metallischen Material gebildet.

Auch die Spannelemente 132 sind vorzugsweise aus einem metallischen Material gebildet.

Insbesondere sind die Spannelemente 132 Spannstangen 154, beispielsweise Gewindestangen 156, auf welche an beiden Enden Schraubmuttern 158 aufschraubbar sind, um letztlich die Querträger 130 einzuspannen.

Mittels der insbesondere aus einem Kunststoffmaterial gebildeten Endplatten 110 sind die Bestandteile der Verspannvorrichtung 128 vorzugsweise thermisch und/oder mechanisch und/oder räumlich von dem Brennstoffzellenstack 106 getrennt.

Insbesondere bildet die Kraftübertragungsstruktur 148 einen thermisch isolierenden Abschnitt 160.

Wie insbesondere Fig. 4 zu entnehmen ist, umfasst die Brennstoffzellenvorrichtung 100 ferner eine Fluidführungseinheit 162.

Die Fluidführungseinheit 162 bildet oder umfasst insbesondere ein Medienmodul 164 zur Medienverteilung und/oder Medienführung.

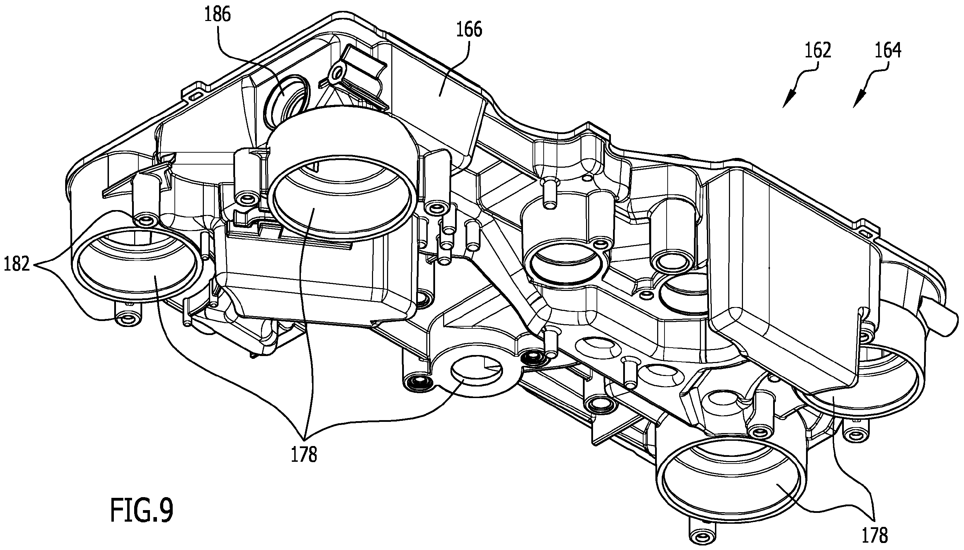

Die Fluidführungseinheit 162 umfasst dabei vorzugsweise einen Grundkörper 166, welcher in den Fig. 9 bis 14 separat dargestellt ist.

Der Grundkörper 166 ist insbesondere mittels eines oder mehrerer Deckelelemente 168 abgedeckt, wodurch insbesondere mehrere Fluidleitungen 170 und sonstige Hohlräume in der Fluidführungseinheit 162 gebildet werden.

Der Grundkörper 166 ist vorzugsweise ebenso wie das Deckelelement 168 ein Kunststoff-Spritzgussbauteil.

Vorzugsweise sind die Kunststoff-Spritzgussbauteile mit zahlreichen Vertiefungen 172 und/oder Erhebungen 174 und/oder Durchtrittsöffnungen 176 versehen, wodurch letztlich die Fluidleitung 170 mit vorgegebenen Formen und Dimensionen gebildet werden.

Insbesondere umfasst der Grundkörper 166 mehrere Anschlussstellen 178, an welchen beispielsweise Anschlussstutzen 180 montierbar sind, um letztlich Medienleitungen mit der Brennstoffzellenvorrichtung 100 zu verbinden und die Medien von außerhalb der Brennstoffzellenvorrichtung 100 zu dem Brennstoffzellenstack 106 zuführen zu können.

Die Anschlussstellen 178 sind hierfür insbesondere mit Befestigungsstellen 182 versehen, an welchen beispielsweise Niederhalter 184, Plattenanker, etc. zum Festlegen von Anschlussstutzen 180 oder sonstigen Komponenten angeordnet werden können.

Ferner umfasst der Grundkörper 166 vorzugsweise eine oder mehrere Aufnahmen für sonstige Zusatzkomponenten und/oder Anschlüsse, beispielsweise elektrische Anschlüsse.

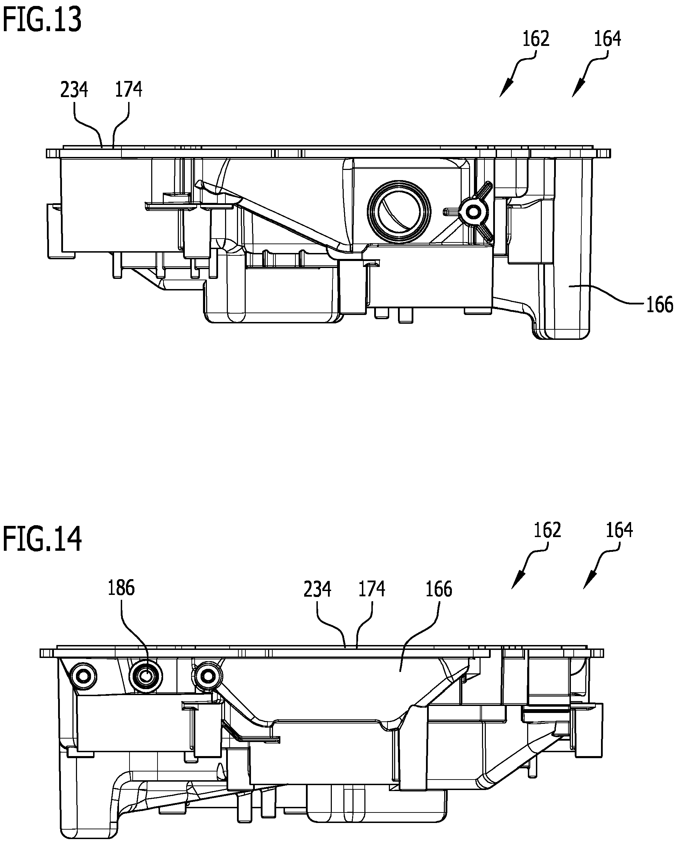

Insbesondere sind ein oder mehrere Sensorelementaufnahmen 186 zur Aufnahme von Sensorelementen 188 vorgesehen (siehe insbesondere die Fig. 4 und 14).

Die Sensorelemente 188 sind insbesondere Drucksensorelemente und/oder Temperatursensorelemente.

Wie insbesondere aus Fig. 4 hervorgeht, ist der Grundkörper 166 sowie das den Grundkörper 166 abdeckende Deckelelement 168 auf einer dem Brennstoffzellenstack 106 abgewandten Seite der Querträger 130 sowie der gesamten Verspannvorrichtung 128 angeordnet.

Die mechanische Befestigung des Grundkörpers 166 erfolgt dabei über die Endplatte 110, an welcher das Deckelelement 168 festgeschweißt wird. An dem Deckelelement 168 wiederum ist der Grundkörper 166 festgeschweißt.

Die Endplatte 110 umfasst vorzugsweise ebenfalls eine oder mehrere Fluidleitungen 170, welche insbesondere eine Strömungsführung 192 bilden.

Mittels der Endplatte 110 kann vorzugsweise jedes im Grundkörper 166 geführte Medium an der Verspannvorrichtung 128 vorbeigeführt und dem Brennstoffzellenstack 106 zugeführt werden. Insbesondere kann hierdurch ein Kontakt der Medien mit den Bauteilen der Verspannvorrichtung 128 vermieden werden, was letztendlich eine Wärmeübertragung sowie eine chemische Belastung minimiert.

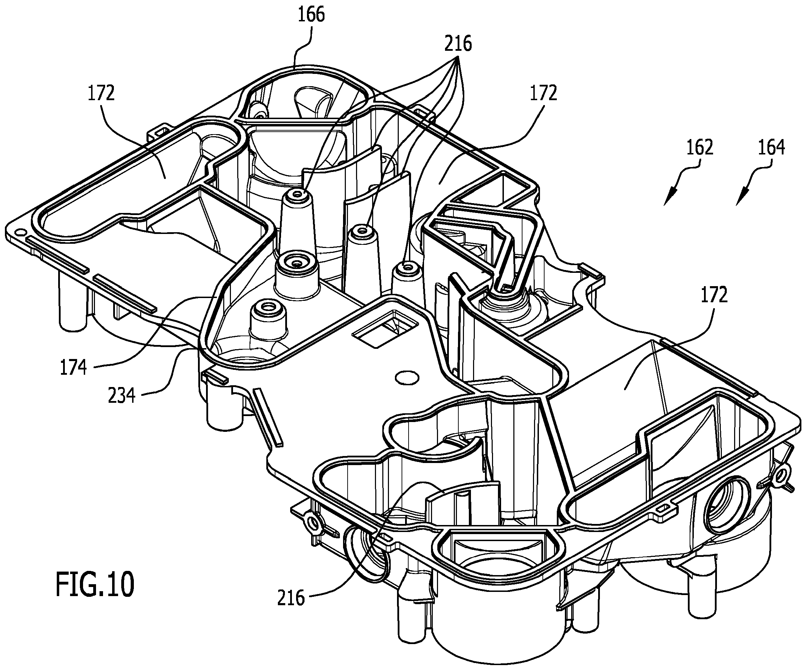

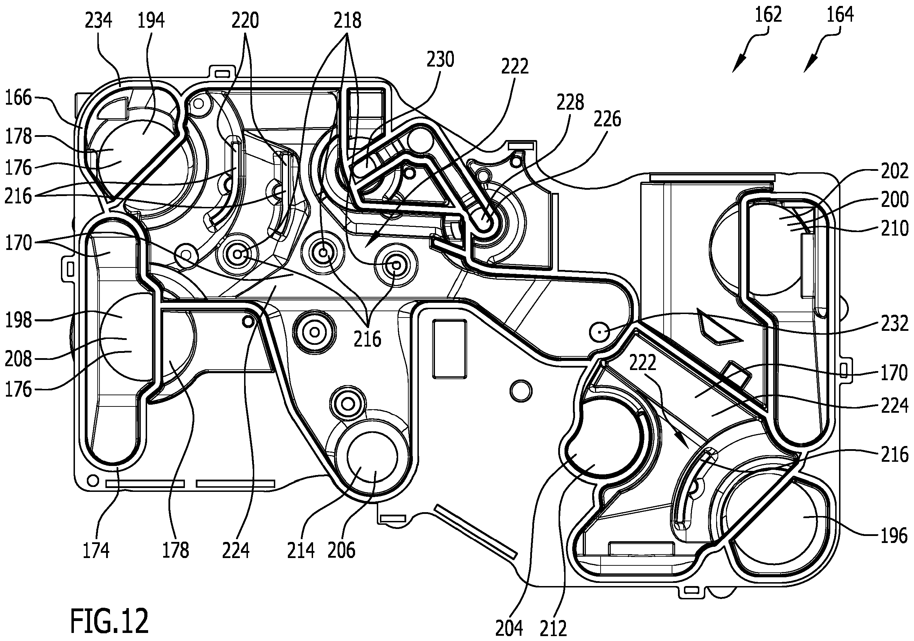

Wie insbesondere den Fig. 10 und 12 zu entnehmen ist, umfasst der Grundkörper 166 und somit auch die Fluidführungseinheit 162 mehrere Durchtrittsöffnungen 176 sowie Anschlussstellen 178 zur Medienversorgung des Brennstoffzellenstacks 106.

Insbesondere sind hierbei folgende Komponenten vorgesehen:
ein Kühlmitteleinlass 194, ein Kühlmittelauslass 196, eine Oxidatorzuführung 198, eine Oxidatorabführung 200, welche insbesondere zugleich eine Abgasabführung 202 bildet, eine Brennstoffzuführung 204 und eine Brennstoffabführung 206.

Die Oxidatorzuführung 198 ist insbesondere ein Lufteinlass 208. Die Oxidatorabführung 200 ist insbesondere ein Luftauslass 210. Die Brennstoffzuführung 204 ist insbesondere ein Wasserstoffeinlass 212. Die Brennstoffabführung 206 ist insbesondere ein Wasserstoffauslass 214.

Der Wasserstoff wird vorzugsweise mittels einer (nicht dargestellten) Rezirkulationseinheit in einem Kreislauf geführt.

Ein Auslass der Zirkulationseinheit wird vorzugsweise an den Wasserstoffeinlass 212 angeschlossen. Ein Einlass der Rezirkulationseinheit wird vorzugsweise an den Wasserstoffauslass 214 angeschlossen.

In den Grundkörper 166 sind ferner vorzugsweise mehrere Stützelemente 216 integriert und/oder eingeformt.

Stützelemente 216 sind insbesondere Stützdome 218 und/oder Stützrippen 220.

Ein oder mehrere Stützelemente 216 dienen einerseits vorzugsweise dazu, den Grundkörper 166 mechanisch zu stabilisieren, insbesondere durch Abstützung und/oder Versteifung von Wandungen des Grundkörpers 166. Andererseits können ein oder mehrere Stützelemente 216 als Abscheideelemente von Abscheidevorrichtungen 222 dienen. Beispielsweise sind ein oder mehrere als Tropfenabscheider 224 ausgebildete Abscheidevorrichtungen 222 in den Grundkörper 166 integriert oder durch denselben gebildet.

Beispielsweise kann ein Tropfenabscheider 224 zur Wassersabscheidung stromabwärts des Wasserstoffauslasses 214 (Anodenauslass) oder darin angeordnet und/oder ausgebildet sein.

Alternativ oder ergänzend hierzu kann ein Tropfenabscheider 224 stromaufwärts des Wasserstoffeinlasses 212 (Anodeneinlass) oder darin angeordnet und/oder ausgebildet sein.

Ferner können in den Grundkörper 166 ein oder mehrere Ventilelemente 226 und/oder Aufnahmen hierfür integriert sein.

Ein Ventilelement 226 kann beispielsweise ein Purgeventil 228, ein Drainageventil 230 und/oder eine Drosseldüse 232 sein.

Mittels der Ventilelemente 226 können dabei unterschiedliche Fluidleitungen 170 der Fluidführungseinheit 162 miteinander verbunden werden, um Druckverhältnisse innerhalb der Fluidführungseinheit 162 gezielt zu steuern und/oder zu regeln und/oder um abgeschiedenes Fluid, insbesondere Wasser, zuverlässig abführen zu können.

Ferner können ein oder mehrere Ventilelemente 226 zum Fluten und/oder Spülen einzelner Fluidleitungen 170 oder der gesamten Brennstoffzellenvorrichtung 100 vorgesehen sein.

Wie insbesondere aus Fig. 10 hervorgeht, bilden die Erhebungen 174 des Grundkörpers 166 insbesondere Schweißstege 234, welche mit hierzu korrespondierenden Schweißstegen 234 an dem Deckelelement 168 in Eingriff bringbar, insbesondere stoffschlüssig verbindbar, sind.

Durch die Ausgestaltung des Grundkörpers 166 als einstückiges Kunststoff-Spritzgussbauteil können vorzugsweise zahlreiche Funktionen in ein einziges Bauteil oder eine einzige Funktionseinheit der Brennstoffzellenvorrichtung 100 integriert werden. Hierdurch kann die Brennstoffzellenvorrichtung 100 einerseits kostengünstig hergestellt werden. Andererseits kann hierdurch die Anzahl der Schnittstellen reduziert werden, wodurch insbesondere eine optimierte Abdichtung der Fluidführungseinheit 162 erhältlich ist.

## Patentansprüche

1. Brennstoffzellenvorrichtung (100), umfassend Folgendes:
- mehrere Brennstoffzellenelemente (102), welche längs einer Stapelrichtung (104) aufeinander gestapelt sind und einen Brennstoffzellenstack (106) bilden;
- eine Fixiervorrichtung (126) zur Fixierung der Brennstoffzellenelemente (102);
- eine Fluidführungseinheit (162) zur Zuführung von Brennstoff und/oder Oxidator und/oder Kühlmittel zu den Brennstoffzellenelementen (102) und/oder zur Abführung von Brennstoff und/oder Oxidator und/oder Abgas und/oder Kühlmittel von den Brennstoffzellenelementen (102),
wobei die Fluidführungseinheit (162) einen Grundkörper (166) umfasst, welcher mehrere Fluidleitungen (170) und Anschlussstellen (178) zum Anschließen von Zuführleitungen und/oder Abführleitungen und/oder Zusatzkomponenten der Brennstoffzellenvorrichtung (100) umfasst, wobei mehrere Fluidleitungen (170) der Fluidführungseinheit (162) durch in dem Grundkörper (166) ausgebildete Vertiefungen und ein oder mehrere diese Vertiefungen (172) abdeckende Deckelelemente (168) gebildet sind und wobei der Grundkörper (166) und das eine oder die mehreren Deckelelemente (168) durch Kunststoffschweißen miteinander verbunden sind.

2. Brennstoffzellenvorrichtung (100) nach Anspruch 1, **dadurch gekennzeichnet, dass** der Grundkörper (166) einstückig ausgebildet ist.

3. Brennstoffzellenvorrichtung (100) nach einem der Ansprüche 1 oder 2, **dadurch gekennzeichnet, dass** der Grundkörper (166) als ein Kunststoff-Spritzgussbauteil ausgebildet ist.

4. Brennstoffzellenvorrichtung (100) nach einem der Ansprüche 1 bis 3, **dadurch gekennzeichnet, dass** das die eine oder die mehreren Deckelelemente (168) an einer der Fixiervorrichtung (126) zugewandten Seite der Fluidleitungen (170) der Fluidführungseinheit (162) angeordnet sind.

5. Brennstoffzellenvorrichtungen (100) nach einem der Ansprüche 1 bis 4, **dadurch gekennzeichnet, dass** der Grundkörper (166) bezüglich der Stapelrichtung (104) einseitig oder beidseitig mittels jeweils eines oder mehrerer Deckelelemente (168) abgedeckt ist.

6. Brennstoffzellenvorrichtung (100) nach einem der Ansprüche 1 bis 5, **dadurch gekennzeichnet, dass** die Fluidführungseinheit (162) mehrere Fluidleitungen (170) umfasst, welche sich jeweils durch den Grundkörper (166), ein oder mehrere Deckelelemente (168) und eine Endplatte (110) des Brennstoffzellenstacks (106) hindurcherstrecken.

7. Brennstoffzellenvorrichtung (100) nach einem der Ansprüche 1 bis 6, **dadurch gekennzeichnet, dass** die Fluidführungseinheit (162), insbesondere der Grundkörper (166), eine oder mehrere Abscheidevorrichtungen (222) zum Abscheiden von Flüssigkeiten und/oder Feststoffen aus einem Gasstrom umfasst.

8. Brennstoffzellenvorrichtung (100) nach Anspruch 7, **dadurch gekennzeichnet, dass** eine oder mehrere Abscheidevorrichtungen (222) in den Grundkörper (166) eingeformt und/oder durch geeignete Formgebung des Grundkörpers (166) gebildet sind.

9. Brennstoffzellenvorrichtung (100) nach einem der Ansprüche 1 bis 8, **dadurch gekennzeichnet, dass** der Grundkörper (166) eine oder mehrere Ventilaufnahmen zur Aufnahme eines oder mehrere Ventilelemente (226), insbesondere Drosselventile, Spülventile, Überdruckventile, Drainageventile (230), etc., umfasst.

10. Brennstoffzellenvorrichtung (100) nach einem der Ansprüche 1 bis 9, **dadurch gekennzeichnet, dass** der Grundkörper (166) eine oder mehrere Sensorelementaufnahmen (186) zur Aufnahme eines oder mehrere Sensorelemente (188) umfasst.

11. Brennstoffzellenvorrichtung (100) nach einem der Ansprüche 1 bis 10, **dadurch gekennzeichnet, dass** der Grundkörper (166) ein oder mehrere Stützelemente (216), insbesondere Stützdome (218) und/oder Stützrippen (220), zur Stabilisierung und/oder Versteifung des Grundkörpers (166) und/oder der Fluidführungseinheit (162) umfasst.

12. Brennstoffzellenvorrichtung (100) nach einem der Ansprüche 1 bis 11, **dadurch gekennzeichnet, dass** die Fluidführungseinheit (162), insbesondere der Grundkörper (166) und/oder ein oder mehrere Deckelelemente (168) und/oder eine oder mehrere Endplatten (110) der Brennstoffzellenvorrichtung (100), eine zumindest teilweise nachbehandelte, insbesondere beschichtete, Oberfläche aufweisen.

13. Brennstoffzellenvorrichtung (100) nach einem der Ansprüche 1 bis 12, **dadurch gekennzeichnet, dass** die Fluidführungseinheit (162) einen thermisch isolierenden Abschnitt (160) umfasst, mittels welchem die Fixiervorrichtung (126) und/oder die Fluidleitungen (170) und/oder eine oder mehrere Abscheidevorrichtungen (222) und/oder eine oder mehrere Ventilelemente (226) einerseits von dem Brennstoffzellenstack (106) andererseits thermisch getrennt sind.

## Claims

1. Fuel cell device (100), comprising the following:
• a plurality of fuel cell elements (102) which are stacked one on top of another along a stacking direction (104) and form a fuel cell stack (106);
• a securing device (126) for fixing the fuel cell elements (102) ;
• a fluid guide unit (162) for supplying fuel and/or oxidiser and/or coolant to the fuel cell elements (102) and/or for removing fuel and/or oxidiser and/or exhaust gas and/or coolant from the fuel cell elements (102),
wherein the fluid guide unit (162) comprises a basic body (166), which comprises a plurality of fluid lines (170) and connection points (178) for the connection of supply lines and/or exhaust lines and/or additional components of the fuel cell device (100), wherein a plurality of fluid lines (170) of the fluid guide unit (162) are formed by recesses formed in the basic body (166) and one or more cover elements (168) covering these recesses (172) and wherein the basic body (166) and the one or more cover elements (168) are connected to one another by plastics welding.

2. Fuel cell device (100) according to claim 1, **characterised in that** the basic body (166) is of integral construction.

3. Fuel cell device (100) according to either of claims 1 or 2, **characterised in that** the basic body (166) is formed as a plastics injection-moulded component.

4. Fuel cell device according to one of claims 1 to 3, **characterised in that** the one or more cover elements (168) are arranged on a side of the fluid lines (170) of the fluid guide unit (162) that faces the securing device (126).

5. Fuel cell devices (100) according to one of claims 1 to 4, **characterised in that** the basic body (166) is covered on one side or both sides with respect to the stacking direction (104) by means of one or more respective cover elements (168).

6. Fuel cell device (100) according to one of claims 1 to 5, **characterised in that** the fluid guide unit (162) comprises a plurality of fluid lines (170), which each extend through the basic body (166), one or more cover elements (168) and an end plate (110) of the fuel cell stack (106).

7. Fuel device (100) according to one of claims 1 to 6, **characterised in that** the fluid guide unit (162), in particular the basic body (166), comprises one or more separating devices (222) for separating liquids and/or solids from a gas flow.

8. Fuel cell device (100) according to claim 7, **characterised in that** one or more separating devices (222) are formed in the basic body (166) and/or are formed by suitable shaping of the basic body (166).

9. Fuel cell device (100) according to one of claims 1 to 8, **characterised in that** the basic body (166) comprises one or more valve receptacles for receiving one or more valve elements (226), in particular throttle valves, flush valves, pressure relief valves, drainage valves (230) etc.

10. Fuel cell device (100) according to one of claims 1 to 9, **characterised in that** the basic body (166) comprises one or more sensor element receptacles (186) for receiving one or more sensor elements (188).

11. Fuel cell device (100) according to one of claims 1 to 10, **characterised in that** the basic body (166) comprises one or more supporting elements (216), in particular supporting domes (218) and/or supporting ribs (220), for stabilising and/or reinforcing the basic body (166) and/or the fluid guide unit (162).

12. Fuel cell device (100) according to one of claims 1 to 11, **characterised in that** the fluid guide unit (162), in particular the basic body (166) and/or one or more cover elements (168) and/or one or more end plates (110) of the fuel cell device (100), have an at least partially after-treated, in particular coated, surface.

13. Fuel cell device (100) according to one of claims 1 to 12, **characterised in that** the fluid guide unit (162) comprises a thermally insulating portion (160), by a means of which the securing device (126) and/or the fluid lines (170) and/or one or more separating devices (222) and/or one or more valve elements (226) are separated from the fuel cell stack (106) and are thermally separated.

## Revendications

1. Dispositif formant pile à combustible (100) comprenant ce qui suit :
- plusieurs éléments de pile à combustible (102) qui sont empilés les uns sur les autres le long d'un sens d'empilement (104) et forment un empilement de piles à combustible (106) ;
- un dispositif de fixation (126) pour la fixation des éléments de pile à combustible (102) ;
- une unité de guidage de fluide (162) pour l'alimentation en combustible et/ou oxydant et/ou moyen de refroidissement des éléments de pile à combustible (102) et/ou pour l'évacuation de combustible et/ou oxydant et/ou gaz d'échappement et/ou moyen de refroidissement par les éléments de pile à combustible (102),
dans lequel l'unité de guidage de fluide (162) comporte un corps de base (166) qui comporte plusieurs conduites de fluide (170) et points de raccordement (178) pour le raccordement de conduites d'alimentation et/ou conduites d'évacuation et/ou composants supplémentaires du dispositif formant pile à combustible (100), dans lequel plusieurs conduites de fluide (170) de l'unité de guidage de fluide (162) sont formées par des cavités réalisées dans le corps de base (166) et un ou plusieurs éléments de couvercle (168) recouvrant ces cavités (172) et dans lequel le corps de base (166) et l'un ou les plusieurs éléments de couvercle (168) sont reliés entre eux par soudage de matière plastique.

2. Dispositif formant pile à combustible (100) selon la revendication 1, **caractérisé en ce que** le corps de base (166) est réalisé d'un seul tenant.

3. Dispositif formant pile à combustible (100) selon l'une quelconque des revendications 1 ou 2, **caractérisé en ce que** le corps de base (166) est réalisé comme un composant moulé par injection de matière plastique.

4. Dispositif formant pile à combustible (100) selon l'une quelconque des revendications 1 à 3, **caractérisé en ce que** l'un ou les plusieurs éléments de couvercle (168) sont agencés au niveau d'un côté tourné vers le dispositif de fixation (126) des conduites de fluide (170) de l'unité de guidage de fluide (162).

5. Dispositif formant pile à combustible (100) selon l'une quelconque des revendications 1 à 4, **caractérisé en ce que** le corps de base (166) est recouvert par rapport au sens d'empilement (104) d'un côté ou des deux côtés au moyen respectivement des un ou plusieurs éléments de couvercle (168).

6. Dispositif formant pile à combustible (100) selon l'une quelconque des revendications 1 à 5, **caractérisé en ce que** l'unité de guidage de fluide (162) comporte plusieurs conduites de fluide (170) qui s'étendent respectivement à travers le corps de base (166), un ou plusieurs éléments de couvercle (168) et une plaque terminale (110) de l'empilement de piles à combustible (106).

7. Dispositif formant pile à combustible (100) selon l'une quelconque des revendications 1 à 6, **caractérisé en ce que** l'unité de guidage de fluide (162), en particulier le corps de base (166), comporte un ou plusieurs dispositifs de séparation (222) pour la séparation de liquides et/ou substances solides d'un courant de gaz.

8. Dispositif formant pile à combustible (100) selon la revendication 7, **caractérisé en ce qu'**un ou plusieurs dispositifs de séparation (222) sont formés dans le corps de base (166) et/ou sont formés par formage approprié du corps de base (166).

9. Dispositif formant pile à combustible (100) selon l'une quelconque des revendications 1 à 8, **caractérisé en ce que** le corps de base (166) comporte un ou plusieurs logements de soupape pour la réception d'un ou plusieurs éléments de soupape (226), en particulier soupapes d'étranglement, soupapes de rinçage, soupapes de surpression, soupapes de drainage (230), etc.

10. Dispositif formant pile à combustible (100) selon l'une quelconque des revendications 1 à 9, **caractérisé en ce que** le corps de base (166) comporte un ou plusieurs logements d'éléments capteurs (186) pour la réception d'un ou plusieurs éléments capteurs (188).

11. Dispositif formant pile à combustible (100) selon l'une quelconque des revendications 1 à 10, **caractérisé en ce que** le corps de base (166) comporte un ou plusieurs éléments d'appui (216), en particulier dômes d'appui (218) et/ou nervures d'appui (220), pour la stabilisation et/ou le renfort du corps de base (166) et/ou de l'unité de guidage de fluide (162).

12. Dispositif formant pile à combustible (100) selon l'une quelconque des revendications 1 à 11, **caractérisé en ce que** l'unité de guidage de fluide (162), en particulier le corps de base (166) et/ou un ou plusieurs éléments de couvercle (168) et/ou une ou plusieurs plaques terminales (110) du dispositif formant pile à combustible (100) présentent une surface au moins partiellement post-traitée, en particulier revêtue.

13. Dispositif formant pile à combustible (100) selon l'une quelconque des revendications 1 à 12, **caractérisé en ce que** l'unité de guidage de fluide (162) comporte une section (160) thermoisolante, au moyen de laquelle le dispositif de fixation (126) et/ou les conduites de fluide (170) et/ou un ou plusieurs dispositifs de séparation (222) et/ou un ou plusieurs éléments de soupape (226) sont séparés d'une part de l'empilement de piles à combustible (106) et d'autre part thermiquement.
